# NEUE EUROPÄISCHE PATENTSCHRIFT

(11) **EP 0 364 854 B2**
(45) Veröffentlichungstag und Bekanntmachung des Hinweises auf die Entscheidung über den Einspruch: **06.10.1999**
(45) Hinweis auf die Patenterteilung: 24.08.1994
(21) Anmeldenummer: 89118740.3
(22) Anmeldetag: 09.10.1989
(51) Int. Cl.: C08J 9/14, C08L 75/04

(54) **Verfahren zur Herstellung von Schuhsohlen mit einer verdichteten Randzone und einem zelligen Kern.**
Process for the production of shoe soles having a compact outer layer and a cellular core
Procédé de production de semelles ayant une couche externe compacte et un noyau cellulaire

(30) Priorität: 15.10.1988 DE 3835193
(43) Veröffentlichungstag der Anmeldung: 25.04.1990
(73) Patentinhaber: BASF Aktiengesellschaft, 67063 Ludwigshafen (DE)
(72) Erfinder: Volkert, Otto, Dr., D-6719 Weisenheim (DE); Reich, Erhard, Dr., D-2845 Damme (DE); Tintelnot, Dieter, D-2840 Diepholz (DE)

(56) Entgegenhaltungen:
- EP-A- 0 243 777
- WO-A-85/04410
- DE-A- 1 694 138
- DE-A- 2 544 560
- DE-A- 2 622 952
- DE-A- 3 430 490
- US-A- 3 178 490
- US-A- 3 182 104
- US-A- 3 939 106
- US-A- 4 065 410
- CHEMICAL ABSTRACTS Band 98, Nr. 8, 21. Februar1983, Seite 37, Zusammenfassung Nr. 55036v, Columbus, Ohio, US; & JP - A-57108119
- Römpps Chemie-Lexikon, 8. Auflage, 1979, S. 718, 969, 2581, 3032
- Kunststoffhandbuch Polyurethane, Carl Hanser Verlag, 1983, S. 333-390

## Beschreibung

Gegenstand der Erfindung ist ein Verfahren zur Herstellung von Urethangruppen enthaltenden Schuhsohlen mit einer verdichteten Randzone und einem zelligen Kern aus an sich bekannten Ausgangsstoffen, jedoch unter Verwendung von niedrigsiedenden aliphatischen und/oder cycloaliphatischen Kohlenwasserstoffen mit 4 bis 8 Kohlenstoffatomen im Molekül als Treibmittel.

Die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug unter Verdichtung ist seit langem bekannt und wird beispielsweise beschrieben in der DE-A-16 94 138 (GB 1 209 243), DE-C-19 55 891 (GB 1 321 679) und DE-B-17 69 886 (US 3 824 199).

Bekannt ist auch die Herstellung von Sohlenmaterial nach dem Polyisocyanat-polyadditionsverfahren und die Verwendung von Urethangruppen enthaltenden Schuhsohlen in der Schuhindustrie. Als wesentliche Anwendungsgebiete für Polyisocyanat-polyadditionsprodukte in der Schuhindustrie sind das direkte Anschäumen von Sohlen und die Herstellung von Polyurethan(PU)-Fertigsohlen zu nennen. Derartige PU-Schuhsohlen können nach der Niederdruck- oder Hochdruck-Technik (RIM) hergestellt werden (Schuh-Technik + abc, 10/1980, Seiten 822 ff).

Eine zusammenfassende Übersicht über Polyurethan-Integralschaumstoffe wurde beispielsweise veröffentlicht in Integralschaumstoffe von H. Piechota und H. Röhr, Carl-Hanser-Verlag, München, Wien, 1975 und in Kunststoff-Handbuch, Band 7, Polyurethane von G. Oertel, Carl-Hanser-Verlag, München, Wien, 2. Auflage, 1983, Seite 333 ff, in dem auch über die Verwendung von Integralschaumstoffen in der Schuhindustrie berichtet wird (Seiten 362 bis 366).

Zur Herstellung von zellhaltigen Kunststoffen nach dem Polyisocyanat-Polyadditionsverfahren werden im wesentlichen zwei Arten von Treibmitteln verwendet:

Niedrigsiedende, inerte Flüssigkeiten, die unter dem Einfluß der exothermen Polyadditionsreaktion verdampfen, beispielsweise Alkane wie Butan, Pentan u.a. oder vorzugsweise halogenierte Kohlenwasserstoffe, wie Methylenchlorid, Dichlormonofluormethan, Trichlorfluormethan u.a. und chemische Verbindungen, die durch eine chemische Reaktion oder thermische Zersetzung Treibgase bilden. Beispielhaft genannt seien die Umsetzung von Wasser mit Isocyanaten unter Bildung von Aminen und Kohlendioxid, die synchron zur Polyurethanherstellung abläuft und die Spaltung von thermisch labilen Verbindungen wie z.B. Azoisobuttersäurenitril, das neben Stickstoff als Spaltprodukt toxisches Tetramethylbernsteinsäuredinitril ergibt oder Azodicarbonamid, dessen Verwendung als Bestandteil einer Treibmittelkombination in der EP-A 0 092 740 (CA 1 208 912) beschrieben wird. Während die zuletzt genannte Methode, bei der thermisch labile Verbindungen wie z.B. Azoverbindungen, Hydrazide, Semicarbazide, N-Nitrosoverbindungen, Benzoxazine u.a. (Kunststoffe 66 (1976), 10, Seiten 698 bis 701) üblicherweise in ein vorgefertigtes Polymer eingearbeitet oder auf das Kunststoffgranulat aufgetrommelt und durch Extrusion verschäumt werden, technisch von untergeordneter Bedeutung blieb, finden die physikalisch wirkenden, niedrigsiedenden Flüssigkeiten, insbesondere Chlorfluoralkane, weltweit in großem Maßstabe zur Herstellung von Polyurethan- oder Polyisocyanurat-Schaumstoffen Verwendung. Nachteilig an diesen Treibgasen ist lediglich die Belastung der Umwelt. Bei der Bildung von Treibgasen durch thermische Spaltung oder chemische Reaktion entstehen hingegen Spaltprodukte und/oder reaktive Nebenprodukte, die in das Polyadditionsprodukt eingelagert oder chemisch gebunden werden und zu einer unerwünschten Veränderung der mechanischen Eigenschaften des Kunststoffes führen können. Im Fall der Bildung von Kohlendioxid aus Wasser und Isocyanat entstehen Harnstoffgruppen im Polyadditionsprodukt, die in Abhängigkeit von ihrer Menge zu einer Verbesserung der Druckfestigkeit bis zur Versprödung des Polyurethans führen können.

Obgleich aliphatische Kohlenwasserstoffe, wie Pentan, Hexan und Heptan preisgünstig und gesundheitlich relativ unbedenklich sind, fanden sie in der Technik lediglich zum Verschäumen von Thermoplasten Verwendung. Pentan und dessen Isomere werden z.B. bei der Herstellung von geschäumtem Polystyrol (Kunststoffe Bd. 62 (1972), S. 206-208) und ferner von Phenolharz-Schaumstoffen benötigt (Kunststoffe, Bd. 60 (1970) S. 548-549).

In der DE-B-1 155 234 (GB 904 003) wird die Herstellung von PU-Schaumstoffen aus einem Isocyanatgruppen aufweisenden Prepolymeren unter Verwendung einer Treibmittelmischung aus Wasser und einem unter Druck verflüssigten, löslichen inerten Gas beschrieben. Als geeignete inerte Gase werden beispielsweise gasförmige Kohlenwasserstoffe, halogenierte Kohlenwasserstoffe, Ethylenoxid, Stickoxide, Schwefeldioxid und vorzugsweise Kohlendioxid genannt. Nach Angaben der GB-A 876 977 können als Treibmittel zur Herstellung von PU-Hartschaumstoffen beispielsweise verwendet werden: gesättigte oder ungesättigte aliphatische Kohlenwasserstoffe, gesättigte oder ungesättigte Dialkylether und fluorhaltige Halogenkohlenwasserstoffe.

Als Gründe dafür, dar sich in der Technik gasförmige Alkane als Treibmittel zur Verschäumung von Polyisocyanat-polyadditionsprodukten nicht durchsetzen konnten, sind die leichte Entflammbarkeit und die bei ihrer Anwendung in der Produktion erforderlichen kostspieligen Sicherheitsmaßnahmen zu nennen. Nicht beschrieben wurde bislang die Verwendung von Alkanen zur Herstellung von Schuhsohlen.

Die Aufgabe der vorliegenden Erfindung bestand darin, die als Treibmittel zur Herstellung von PU-Schuhsohlen verwendeten bekannten Fluorchlorkohlenwasserstoffe ganz oder zumindest teilweise durch andere umweltfreundliche Treibmittel zu ersetzen.

Diese Aufgabe konnte überraschenderweise durch die Verwendung von aliphatischen oder cycloaliphatischen Kohlenwasserstoffen mit 5 Kohlenstoffatomen im Molekül oder Mischungen davon als Treibmittel gelöst werden.

Gegenstand der Erfindung ist somit ein Verfahren zur Herstellung von weichen, flexiblen Schuhsohlen mit einer verdichteten Randzone und einem zelligen Kern mit einer Gesamtdichte von 0,4 bis 1,0 g/cm³ durch Umsetzung von
a) organischen und/oder modifizierten organischen Polyisocyanaten mit
b) mindestens einem Polyol mit einer Funktionalität von 2 bis 4 und einem Molekulargewicht von 1200 bis 8000, ausgewählt aus der Gruppe der Polyether-polyole, Polyesterpolyole, Polythioether-polyole, Polyesteramide, hydroxylgruppenhaltigen Polyacetale und hydroxylgruppenhaltigen Polycarbonate,
c) Kettenverlängerungs- und/oder Vernetzungsmitteln mit einem Molekulargewicht von 60 bis 300, ausgewählt aus der Gruppe der aliphatischen, cycloaliphatischen und araliphatischen Diole mit 2 bis 14 Kohlenstoffatomen, der Triole und hydroxylgruppenhaltigen Polyalkylenoxide auf der Grundlage von Ethylen- und/oder 1,2-Propylenoxid und den genannten Diolen oder Triolen als Startermoleküle in Gegenwart von
d) Treibmitteln,
e) Katalysatoren und gegebenenfalls
f) Hilfsmitteln und/oder Zusatzstoffen,
nach dem one-shot-Verfahren mit Hilfe der Hochdrucktechnik (RIM)
in einem geschlossenen Formwerkzeug unter Verdichtung mit einm Verdichtungsgrad von 2 bis 8,5, das dadurch gekennzeichnet ist, daß man als Teibmittel (d) niedrigsiedende aliphatische oder cycloaliphatische Alkane mit 5 Kohlenstoffatomen im Molekül oder Mischungen davon verwendet.

Überraschenderweise zeigte sich, daß die erfindungsgemäß als Treibmittel verwendbaren Alkane mit 5 Kohlenstoffatomen im Molekül oder Mischungen davon PU-Integralschaumstoffe mit guten mechanischen Eigenschaften ergeben, die zumindest mit den unter Verwendung von Trichlorfluormethan hergestellten Produkten vergleichbar sind. Da die Gasausbeuten, d.h. die pro Mol Treibmittel erhaltenen Schaumvolumina bei den (cyclo)aliphatischen Alkanen mit 5 Kohlenstoffatomen im Molekül oder Mischungen davon erheblich größer sind als bei den bisher eingesetzten Fluorchlorkohlenwasserstoffen mit vergleichbarem Siedepunkt, ergibt sich, verbunden mit dem niedrigen Molekulargewicht, auf diese Weise eine erhebliche Reduktion der erforderlichen Treibmittelmenge. So erzielt man mit Gehalten von aliphatischen oder cycloaliphaitschen Alkanen mit 5 Kohlenstoffatomen im Molekül von 35 bis 40 Gew.%, bezogen auf die benötigte Fluorchlorkohlenwasserstoffmenge, PU-Integralschaumstoffe gleicher Gesamtdichte. Trotz der reduzierten Treibmittelmenge ist die verdichtete Randzone an der Oberfläche glatt und im wesentlichen porenfrei. Durch die erforderliche geringe Menge an Treibmittel, die größtenteils nach dem Aushärten des Integralschaumstoffes in der Randzone gelöst sowie in den Zellen des Kerns verbleiben, ist die beim Aufschäumen freiwerdende Alkanmenge derart gering, daß keine ernsthaften Sicherheitsprobleme bei der Verarbeitung auftreten.

Zu den erfindungsgemäß geeigneten Ausgangsstoffen (a) bis (f) und zur Herstellung der Schuhsohlen ist im einzelnen folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4-und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 800 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
   Sofern für spezielle Anwendungsgebiete Formkörper mit lichtbeständiger Oberfläche, wie z.B. Automobillenkräder oder -Armaturenbretter, gefordert werden, werden zu deren Herstellung bevorzugt aliphatische oder cycloaliphatische Polyisocyanate, insbesondere modifizierte Polyisocyanate auf der Grundlage von Hexamethylen-diisocyanat-1,6 oder Isophoron-diisocyanat oder Gemische der genannten Diisocyanate gegebenenfalls mit Diphenylmethan-diisocyanat- und/oder Toluylendiisocyanat-Isomeren verwendet.
b) Als Polyole b) werden solche mit einer Funktionalität von 2 bis 4 und einem Molekulargewicht von 1200 bis 8000, vorzugsweise von 1200 bis 6000 verwendet. Bewährt haben sich Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und.mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen eine Funktionalität von 2 bis 4, insbesondere 2 bis 3 und ein Molekulargewicht von 1200 bis 3000 und insbesondere 1800 bis 2500.
   Insbesondere als Polyole verwendet werden jedoch Polyether-polyole, die nach bekannten Verfahren, beispielsweise durch anionische Poly- merisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 4 reaktive Wasserstoffatome gebunden enthält, oder durch kationische Polymerisa- tion mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.
   Die Polyether-polyole, vorzugsweise Polyoxypropylen- und Polyoxypropylen-polyoxyethylen-polyole, besitzen eine Funktionalität von 2 bis 4 und Molekulargewichte von 1200 bis 8000, vorzugsweise 1200 bis 6000 und insbesondere 1800 bis 4000 und geeignete Polyoxytetramethylen-glykole ein Molekulargewicht bis ungefähr 3500, vorzugsweise von 400 bis 2200.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4,-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder polyaminen gewonnenen, vorwiegend linearen Kondensate.
c) Die Schuhsohlen mit verdichteter Randzone und zelligem Kern werden unter Mitverwendung von Kettenverlängerungs- und/oder Vernetzungsmitteln hergestellt. Als Kettenverlängerungs- und/ oder Vernetzungsmittel verwendet werden Diole und/oder Triole mit Molekulargewichten von 60 bis 300. In Betracht kommen aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxy- cyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Die genannten Kettenverlängerungsmittel und/oder Vernetzungsmittel (c) können einzeln oder als Mischungen von gleichen oder verschiedenen Verbindungsarten verwendet werden.
   Die Kettenverlängerungsmittel, Vernetzungsmittel oder Mischungen davon kommen zweckmäßigerweise in Mengen von 2 bis 60 Gew.%, vorzugsweise 8 bis 50 Gew.% und insbesondere 10 bis 40 Gew.%, bezogen auf das Gewicht der Komponenten (b) und (c) zum Einsatz.
d) Erfindungsgemäß finden als Treibmittel (d) aliphatische oder cycloaliphatische Alkane mit 5 Kohlenstoffatomen im Molekül Verwendung. Bevorzugt eingesetzt werden iso-Pentan und insbesondere n-Pentan sowie Gemische der Pentane.
   Die erfindungsgemäß verwendbaren (cyclo)aliphatischen Alkane mit 5 Kohlenstoffatomen im Molekül oder Mischungen davon können einzeln oder in Form von Mischungen aus zwei oder mehreren Treibmitteln eingesetzt werden. Zweckmäßigerweise verwendet werden die (cyclo)aliphatischen Alkane mit 5 Kohlenstoffatomen in einer Menge von 0,5 bis 10 Gew.%, vorzugsweise 1 bis 7 Gew.%, bezogen auf das Gewicht der Komponenten (a), (b) und (c).
   Zusätzlich zu den erfindungsgemäß verwendbaren Treibmitteln (d) eignet sich auch Wasser als Treibmittel, das mit einem organischen, gegebenenfalls modifizierten Polyisocyanaten (a) unter Bildung von Kohlendioxid und Harnstoffgruppen reagiert und dadurch die Druckfestigkeit der Endprodukte beeinflußt. Da die in den Polyester- und Polyetherpolyolen als Nebenprodukt enthaltene Wassermenge meist ausreicht, bedarf es vielfach keiner separaten Wasserzugabe. Sofern jedoch der Polyurethan-Formulierung zusätzlich Wasser einverleibt werden muß, wird dies üblicherweise in Mengen von 0,05 bis 2 Gew.-%, vorzugsweise von 0,1 bis 1 Gew.-%, bezogen auf das Gewicht der Aufbaukomponente (a) bis (c) verwendet.
e) Als Katalysatoren (e) zur Herstellung der Formkörper mit einer verdichteten Randzone und einem zelligen Kern werden insbesondere Verbindungen verwendet, die die Reaktion der Hydroxylgruppen enthaltenden Verbindungen der Komponente (b) gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, Pentamethyldiethylentriamin, Tetramethyl-diaminoethylether, Bis-(dimethylaminopropyl)-harnstoff, Dimethylpiperazin, 1,2-Dimethylimidazol, 1-Azabicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Insbesondere bei Verwendung eines größeren Polyisocyanatüberschusses kommen als Katalysatoren ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.-% Katalysator bzw. Katalysatorkombination bezogen auf das Gewicht der Komponente (b).
f) Der Reaktionsmischung zur Herstellung der Formkörper können gegebenenfalls auch noch Hilfsmittel und/oder Zusatzstoffe (f) einverleibt werden. Genannt seien beispielsweise oberflächenaktive Substanzen, Schaumstabilisatoren, Zellregler, äußere oder innere Trennmittel, Füllstoffe, Farbstoffe, Pigmente; Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie z.B. Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 (EP-A-153 639) oder Gemischen aus organischen Aminen, Metallsalzen der Stearinsäure und organischen Mono- und/oder Dicarbonsäuren oder deren Anhydride (DE-A-36 07 447).
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-12-chlorpropyl)phosphat, Tris(1,3-dichlorpropyl)phosphat, )phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen dererfindungsgemä∼ hergestellten Formkörper verwendet werden. Im allgemeinen hat es sich als zweckmäpig erwiesen, 5 bis 50 Gew.-Teile,vorzugsweise 5 bis 25 Gew.-Teile der genannten Flammschutzmittel oder -mischungen für jeweils 100 Gew.-Teile der Komponenten (a) bis (c) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.
   Zur Herstellung der Formkörper werden die organischen Polyisocyanate (a), die Polyole (b) und Kettenverlängerungs- und/oder Vernetzungsmittel (c) in solchen Mengen zur Umsetzung gebracht, dar das Aquivalenz-Verhältnis von NCO-Gruppen der Polyisocanate (a) zur Summe der reaktiven Wasserstoffatome der Komponenten (b) und gegebenenfalls (c) 1:0,85 bis 1,25, vorzugsweise 1:0,95 bis 1,15 beträgt. Falls die Formkörper zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und-gegebenenfalls (c) von 1,5 bis 20:1, vorzugsweise 1,5 bis 8:1 angewandt.

Die Herstellung der Schuhsohlen z.B. der Lauf-, Zwischen- oder Komfortsohlen, erfolgt nach dem one shot-Verfahren mit Hilfe der Hochdruck-Technik. Die Herstellung von Zweischichtenschuhsohlen wird beispielsweise in Schuh-Technik + abc 10 (1980), Seiten 822 ff beschrieben. Zu ihrer Herstellung wird zunächst die Reaktionsmischung zur Bildung der Urethan- und Harnstoffgruppen enthaltenden Laufsohle in das geschlossene Formwerkzeug unter Verdichtung mit einem Verdichtungsgrad von 2 bis 8,5 eingespritzt. Nach einer Formstandzeit von 10 bis 120 Sekunden, vorzugsweise von 20 bis 90 Sekunden, kann die Laufsohle entformt oder bei Verwendung eines Schuhformwerkzeugs mit schwenkfähigen Doppelleisten, dieser zur Herstellung der Zwischen- der Komfortsohle gedreht, vorteilhafterweise um 1800, und das Formwerkzeug erneut verschlossen werden. Die Reaktionsmischung zur Herstellung der Zwischen- oder Komfortsohle kann eingespritzt werden, sobald die Laufsohle eine ausreichende greenstrength aufweist und solange sie nicht vollsätndig ausgehärtet ist. Zweckmäßigerweise erfolgt die Einspritzung 20 bis 100 Sekunden, vorzugsweise 30 bis 90 Sekunden nach Beendigung des Einspritzvorganges zur Bildung der Laufsohle. Auf die zusätzliche Verwendung von Klebstoffen zur Verbindung der Lauf- und Zwischen- oder Komfortsohle kann üblicherweise verzichtet werden.

Die Menge des in das Formwerkzeug eingebrachten Reaktionsgemisches wird so bemessen, daß die Schuhsohlen eine Dichte von 0,4 bis 1,0 g/cm³ besitzen, wobei die Laufsohlen insbesondere eine Dichte von 0,8 bis 1,0 g/cm³ oder höher und die Zwischen- oder Komfortsohlen insbesondere eine Dichte von 0,45 bis 0,65 g/cm³ aufweisen. Die Verdichtungsgrade zur Herstellung der Formkörper mit verdichteter Randzone und zelligem Kern liegen im Bereich von 2 bis 8,5, vorzugsweise 2 bis 7, wobei für Zwischen- oder Komfortsohlen Verdichtungsgrade von 2,4 bis 4,5 und für Laufsohlen Verdichtungsgrade von 3 bis 7 besonders bevorzugt sind.

Die in den Beispielen genannten Teile beziehen sich auf das Gewicht.

### Beispiel 1

Zur Herstellung der Zweischichtenschuhsohle wurden zwei Hochdruckanlagen vom Typ Desma PSA 74 verwendet. Das auf 50°C temperierte Schuhformwerkzeug war mit einem schwenkfähigen Doppelleisten ausgestattet. Das Formwerkzeugvolumen der Laufsohle betrug 80 cm³, das der Komfortsohle 200 cm3. Mit der ersten Desma PSA 74 Hochdruckanlage wurde zunächst die Reaktionsmischung zur Herstellung der Laufsohle eingespritzt. Nach 60 bzw. 90 Sekunden wurde das Formwerkzeug durch Ankleben des Doppelleisten geöffnet, der Doppelleisten um 180° gedreht, so daß der zweite Leisten über dem Formwerkzeug zum Stehen kam, der danach auf das Formwerkzeug abgesenkt wurde und dieses nach oben verschloß. Die Reaktionsmischung wurde zur Herstellung der Komfortsohle in einer solchen Menge eingespritzt, daß ihre Dichte 0,45 g/cm³ betrug. Die Zweischichtenschuhsohle wurde nach insgesamt 2 Minuten entformt. Nach mehrtägiger Lagerung bei Raumtemperatur wurde die Haftfestigkeit des Schuhsohlenverbunds durch eine Zugprüfung bestimmt. Hierzu wurde die Grenzfläche zwischen Lauf- und Komfortsohle eingeschnitten und die beiden Sohlen auseinandergerissen. Ein Adhäsionsbruch trat auf bei Trennung von Lauf- und Komfortsohle an deren Grenzfläche. Beim-Kohäsionsbruch erfolgte die Rißbildung im Polyurethan-Polyharnstoff-Elastomeren.

### A-Komponente:

Mischung aus
- 92,95 Gew.-Teilen: eines Polyoxypropylen-polyoxyethylen-glykols mit einer Hydroxylzahl von 29, hergestellt durch Polyaddition von 1,2-Propylenoxid und anschließend Ethylenoxid an Propylenglykol,
- 6,0 Gew.-Teilen: 2,4-Dimethyl-6-tert.-butyl-phenylen-diamin-1,3,
- 1,0 Gew.-Teilen: einer 33 gew.%igen Lösung von Diazabicyclooctan in Dipropylenglykol und
- 0,05 Gew.-Teilen: Dibutylzinndilaurat.

### B-Komponente:

Urethangruppen enthaltende Polyisocyanatmischung mit einem NCO-Gehalt von 23 Gew.%, hergestellt durch partielle Umsetzung von 4,4'-Diphenylmethan-diisocyanat mit Dipropylenglykol.

100 Gew.-Teile der A-Komponente und 23,1 Gew.-Teile der B-Komponente - entsprechend einem NCO-Index von 1,05 - wurden bei 30°C nach dem RIM-Verfahren mit einer Hochdruckanlage vom Typ Desma PSA 74 zu einer kompakten Laufsohle der Dichte 1,1 g/cm³ umgesetzt.

Nach 60 Sekunden wurde die Laufsohle teilweise entformt durch Anhaben der Laufsohlenpatrize des Doppelleistens, Schwenken des Doppelleistens um 180° und erneutes Verschließen des Formwerkzeugs mit der Komfortsohlenpatrize. Nach weiteren 15 Sekunden wurde die Reaktionsmischung zur Herstellung der Komfortsohle eingeschossen. Sie bestand aus einer Mischung (A-Komponente) aus
- 83,55 Gew.-Teilen: des oben genannten Polyoxypropylen-polyoxyethylenglykols der Hydroxylzahl 29, hergestellt durch Polyaddition von 1,2-Propylenoxid und anschließend Ethylenoxid an Propylenglykol,
- 7,0 Gew.-Teilen: 2,4-Dimethyl-6-tert.-butyl-phenylen-diamin-1,3,
- 1,0 Gew.-Teilen: einer 33 gew.%igen Lösung von Diazabicyclooctan in Dipropylenglykol,
- 0,05 Gew.-Teilen: Dibutylzinndilaurat,
- 0,1 Gew.-Teilen: eines Silikonöls (DC 193 der Dow Corning),
- 0,3 Gew.-Teilen: Wasser und
- 2,0 Gew.-Teilen: eines Gemisches aus n-Pentan und iso-Pentan im Gewichtsverhältnis 50:50 sowie
- 30,4 Gew.-Teilen: einer Urethangruppen enthaltenden Polyisocyanatmischung mit einem NCO-Gehalt von 23 Gew.% (B-Komponente), hergestellt durch partielle Umsetzung von 4,4'-Diphenylmethan-diisocyanat mit Dipropylenglykol.

Die Reaktionsmischung (Isocyanatindex 1,05) wurde mit einer Temperatur von 30°C in einer solchen Menge in das Formwerkzeug eingespritzt, daß eine Komfortsohle der Dichte 0,45 g/cm³ resultierte. Die hergestellte Zweischichtenschuhsohle wurde nach 2 Minuten entformt.

Nach einer mehrtägigen Lagerzeit wurde die Haftung des Verbundes anhand von 2 cm breiten Streifen mit Hilfe einer Zugprüfmaschine bestimmt. Bei sämtlichen Proben erfolgte die Rißausbreitung im Polyurethan-Polyharnstoff-Elastomeren (Kohäsionsbruch) und nicht in der Grenzfläche von Lauf- und Komfortsohle. Die maximalen Weiterreißfestigkeiten lagen bei 5,4 N/mm.

## Patentansprüche

1. Verfahren zur Herstellung von weichen, flexiblen Schuhsohlen mit einer verdichteten Randzone und einem zelligen Kern mit einer Gesamtdichte von 0,4 bis 1,0 g/cm³ durch Umsetzung von
a) organischen und/oder modifizierten organischen Polyisocyanaten mit
b) mindestens einem Polyol mit einer Funktionalität von 2 bis 4 und einem Molekulargewicht von 1200 bis 8000, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate und
c) Kettenverlängerungs- und/oder Vernetzungsmitteln mit einem Molekulargewicht von 60 bis 300, ausgewählt aus der Gruppe der aliphatischen, cycloaliphatischen und araliphatischen Diole mit 2 bis 14 Kohlenstoffatomen, der Triole und hydroxylgruppenhaltigen Polyalkylenoxide auf der Grundlage von Ethylen- und/oder 1,2-Propylenoxid und den genannten Diolen oder Triolen als Startermoleküle
in Gegenwart von
d) Treibmitteln,
e) Katalysatoren und gegebenenfalls
f) Hilfsmitteln und/oder Zusatzstoffen,
nach dem one shot-Verfahren mit Hilfe der Hochdruck-Technik (RIM) in einem geschlossenen Formwerkzeug unter Verdichtung mit einem Verdichtungsgrad von 2 bis 8,5, dadurch gekennzeichnet, daß man als Treibmittel (d) aliphatische oder cycloaliphatische Alkane mit 5 Kohlenstoffatomen im Molekül oder Mischungen davon verwendet.

2. Verfahren zur Herstellung von weichen, flexiblen Schuhsohlen nach Anspruch 1, dadurch gekennzeichnet, daß man die aliphatischen und/oder cycloaliphatischen Alkane mit 5 Kohlenstoffatomen in einer Menge von 0,5 bis 10 Gew.-%, bezogen auf das Gesamtgewicht der Komponenten (a) bis (c) verwendet.

3. Verfahren zur Herstellung von weichen, flexiblen Schuhsohlen nach Anspruch 1 oder 2, dadurch gekennzeichnet, daß man als Treibmittel (d) n-Pentan und/oder iso-Pentan verwendet.

4. Verfahren zur Herstellung von weichen, flexiblen Schuhsohlen nach den Ansprüchen 1 oder 2, dadurch gekennzeichnet, daß man als Treibmittel (d) Cyclopentan verwendet.

5. Verfahren zur Herstellung von weichen, flexiblen Schuhsohlen nach einem der Ansprüche 1 bis 4, dadurch gekennzeichnet, daß man als Treibmittel (d) aliphatische und/oder cycloaliphatische Alkane mit 5 Kohlenstoffatomen im Molekül und Wasser verwendet.

## Claims

1. A process for the production of a soft, flexible shoe sole having a compacted edge zone and a cellular core and a total density of from 0.4 to 1.0 g/cm³, by reacting
a) organic and/or modified organic polyisocyanates with
b) at least one polyol having a functionality of from 2 to 4 and a molecular weight of from 1200 to 8000, selected from the group consisting of the polyetherpolyols, polyesterpolyols, polythioetherpolyols, polyesteramides, hydroxyl-containing polyacetals and hydroxyl-containing aliphatic polycarbonates, and
c) chain extenders and/or crosslinking agents having a molecular weight of from 60 to 300, selected from the group consisting of the aliphatic, cycloaliphatic and araliphatic diols of 2 to 14 carbon atoms, the triols and hydroxyl-containing polyalkylene oxides based on ethylene oxide and/or 1,2-propylene oxide and said diols or triols as initiator molecules
in the presence of
d) blowing agents,
e) catalysts and, if required,
f) assistants and/or additives,
by the one shot process using the high pressure reaction injection molding (RIM) technique in a closed mold with compaction, the degree of compaction being from 2 to 8.5, wherein the blowing agent (d) used is an aliphatic or cycloaliphatic alkane having 5 carbon atoms in the molecule, or a mixture of such alkanes.

2. A process for the production of a soft, flexible shoe sole as claimed in claim 1, wherein the aliphatic and/or cycloaliphatic alkanes having 5 carbon atoms are used in an amount of from 0.5 to 10% by weight, based on the total weight of components (a) to (c).

3. A process for the production of a soft, flexible shoe sole as claimed in claim 1 or 2, wherein n-pentane and/or isopentane are used as the blowing agents (d).

4. A process for the production of a soft, flexible shoe sole as claimed in claim 1 or 2, wherein cyclopentane is used as the blowing agent (d).

5. A process for the production of a soft, flexible shoe sole as claimed in any of claims 1 to 4, wherein aliphatic and/or cycloaliphatic alkanes having 5 carbon atoms in the molecule and water are used as the blowing agents (d).

## Revendications

1. Procédé de préparation de semelles de chaussures souples et flexibles à zone de bordure compacte et noyau alvéolaire, à une densité globale de 0,4 à 1,0 g/cm³, par réaction de
a) des polyisocyanates organiques et/ou des polyisocyanates organiques modifiés avec
b) au moins un polyol avec une fonctionnalité de 2 à 4 et un poids moléculaire de 1200 à 8000, choisi parmi le groupe constitué par les polyéther-polyols, les polyester-polyols, les polythioéther-polyols, les polyester-amides, les polyacétals contenant des groupes hydroxy et les polycarbonates aliphatiques contenant des groupes hydroxy, et
c) des agents d'allongement des chaînes et/ou agents réticulants de poids moléculaire compris entre 60 et 300, choisis dans le groupe constitué par les diols aliphatiques, cycloaliphatiques et araliphatiques ayant 2 à 14 atomes de carbone, les triols et les polyalkylènoxydes contenant des groupes hydroxy à base d'oxyde d'éthylène et/ou d'oxyde de 1,2-propylène et les diols ou triols mentionnés comme molécules de départ,
en présence
d) de gonflants,
e) de catalyseurs et le cas échéant
f) de produits auxiliaires et/ou additifs
par la technique "one shot", à haute pression (RIM) dans un outil de moulage fermé avec compression à un taux de compression de 2 à 8,5, caractérisé par le fait que l'on utilise en tant que gonflants d) des alcanes aliphatiques ou cycloaliphatiques contenant 5 atomes de carbone dans la molécule ou leurs mélanges.

2. Procédé de préparation de semelles de chaussures souples et flexibles selon la revendication 1, caractérisé par le fait que l'on utilise des alcanes aliphatiques et/ou cycloaliphatiques à 5 atomes de carbone en quantité de 0,5 et 10 % du poids total des composants a) à c).

3. Procédé de préparation de semelles de chaussures souples et flexibles selon la revendication 1 ou 2, caractérisé par le fait que l'on utilise en tant que gonflants d) le n-pentane et/ou l'isopentane.

4. Procédé pour la fabrication de semelles de chaussures souples et flexibles selon la revendication 1 ou 2, caractérisé par le fait que l'on utilise en tant que gonflants d) le cyclopentane.

5. Procédé pour la fabrication de semelles de chaussures souples et flexibles selon l'une des revendications 1 à 4, caractérisé par le fait que l'on utilise en tant que gonflants d) des alcanes aliphatiques et/ou cycloaliphatiques à 5 atomes de carbone dans la molécule et de l'eau.
